# EUROPEAN PATENT APPLICATION

(11) **EP 1 542 147 A2**
(43) Date of publication of application: **15.06.2005**
(21) Application number: 04027768.3
(22) Date of filing: 23.11.2004
(51) Int. Cl.: G06F 17/60

(54) **Global balancing tool**

(30) Priority: 24.11.2003 US 707155
(71) Applicant: Cargill Incorporated, Minneapolis, MN 55440-5624 (US)
(72) Inventor: Fiascone, Bernadette, Lombard, Illinois 60148 (US); Forsythe, David, Naperville, Illinois 60543 (US); Mayeda, Chris, Chicago, Illinois 60647 (US); Srivastava, Anupam, Wheaton, Illinois 60187 (US)
(74) Representative: VOSSIUS & PARTNER

(57) **Abstract**

Methods and systems for reconciling firm account data and exchange account data are provided. Firm account data and exchange account data are compared and discrepancies are displayed on a display device. A user may receive additional information about the data that does not match by selecting appropriate hyperlinks or other navigational items. The user may also enter adjustments.

## Description

The present invention relates to trading systems and methods. More particularly to methods and systems that reconcile exchange account data with firm account data and that provide adjustment mechanisms.

Brokerage houses receive orders from clients and have those orders filled by executing trades at exchanges. Brokerage houses maintain records showing firm account data that includes a list of all of the positions held by clients of the brokerage house. Periodically exchanges. provide records that include exchange account data to brokerage houses. Exchange account data includes a list of all of the positions, including cash positions, held by the brokerage house or firm at the exchange. Human error, system problems and other factors sometimes result in firm account data being different from exchange account data. In order to meet regulatory requirements brokerage houses must periodically reconcile firm account data and exchange account data.

Prior art approaches to reconciling firm account data and exchange account data have included generating paper reports for each exchange or brokerage house. After reviewing a report, a user must then investigate the matter and access the appropriate record systems to make necessary adjustments.

There are several drawbacks to the conventional systems and methods for reconciling firm account data with exchange account data. For example, when a brokerage house conducts transactions at several exchanges, the variety of formats and media used by exchanges to report exchange account data has made it burdensome for the brokerage houses to reconcile all of the trading data. Moreover, systems that generate the reports used to reconcile data have not provided a mechanism for users to investigate discrepancies or correct those discrepancies.

Therefore, there is a need in the art for systems and methods that allow brokerage houses to reconcile trading data received from a plurality of exchanges and brokerage houses. There is also a need in the art for reconciliation systems and methods that facilitate the correction of discrepancies in firm account data and exchange account data.

The present invention overcomes one or more of the problems and limitations of the prior art by providing methods and systems that allow brokerage houses to reconcile trading data and enter adjustments. A match system compares firm account data to exchange account data and generates a list of discrepancies. A user interface is generated that displays the discrepancies and that facilitates entering adjustments.

In one embodiment, advantages of aspects of the present invention are provided by a computer-implemented method of reconciling firm account data with exchange account data received from at least one exchange. The method includes receiving exchange account data that lists positions held by clients of the firm at at least one exchange and receiving firm account data that lists positions held by the clients of the firm at the exchange. The exchange account data is compared to the firm account data. Positions included in the exchange account data and the firm account data that do not match are displayed on a display device. As used herein, "positions" includes cash positions. Next, an input for additional information relating to the positions that do not match is received from a user. In response to the input, additional information is displayed on a display device.

In another embodiment of the invention, a computer-readable medium containing computer-executable components is provided. The components include a matching module that compares exchange account data to firm account data and identifies positions included in the exchange account data and the firm account data that do not match. A display module that generates information to display on a display device regarding the positions that do not match and, in response to a request from a user, additional information regarding the positions that do not match is also included.

Of course, the methods and systems of the above-referenced embodiments may also include other additional elements, steps, computer-executable instructions, or computer-readable data structures. In this regard, other embodiments are disclosed and claimed herein as well.

The details of these and other embodiments of the present invention are set forth in the accompanying drawings and the description below. Other features and advantages of the invention will be apparent from the description and drawings, and from the claims.

The present invention may take physical form in certain parts and steps, embodiments of which will be described in detail in the following description and illustrated in the accompanying drawings that form a part hereof, wherein:
Figure 1 shows a system for reconciling and correcting trading data in accordance with an embodiment of the invention;
Figure 2 shows an exemplary display screen for presenting account data to a user, in accordance with an embodiment of the invention;
Figure 3 illustrates an exemplary login page, in accordance with an embodiment of the invention;
Figure 4 illustrates an adjustment page, in accordance with an embodiment of the invention; and
Figure 5 illustrates an edit page that allows a user to edit adjustments, in accordance with an embodiment of the invention.

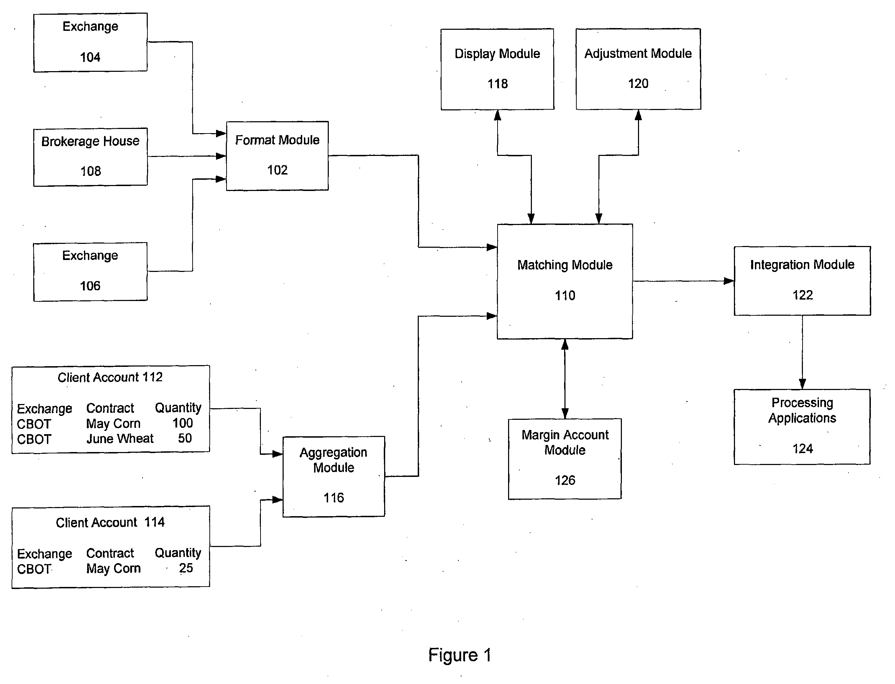

Figure 1 shows a system for reconciling firm account data and exchange account data in accordance with an embodiment of the invention. A format module 102 receives exchange account data from exchanges 104 and 106. Format module 102 may also receive exchange data from a brokerage house 108. A firm using the system shown in Figure 1 may use brokerage house 108 to conduct trades at foreign exchanges or at exchanges that are seldom used by the firm. Of course additional exchanges and brokerage houses may be connected to format module 102. Moreover, some exchanges and/or brokerage houses may transmit data directly to matching module 110 when the data is known to be in a proper format.

Each exchange or brokerage house connected to format module 102 may deliver data in a different format or use a different media. For example, exchange 104 may represent the Chicago Board of Trade and have a specific format for delivering exchange account data. Exchange 106 may represent the New York Stock Exchange that may use a format that is different from the format used by exchange 104. Moreover, exchange 104 may transmit data via email while exchange 106 may use the postal service to deliver an optical disk containing the data.

After receiving exchange account data, format module 102 may transform the data into a common format that may be used by a matching module 110. Format module 102 may perform functions such as extracting data from files having different formats, reformatting data to use a common terminology and converting currencies. Format module 102 may also translate text. The functions performed by format module 102 may facilitate processing by matching module 110.

A firm using the system shown in Figure 1 may perform trading services for several different clients. The firm may be a brokerage house or other entity. Client account 112 contains two trading positions. The client holds 100 contracts for May corn at the Chicago Board of Trade and 50 contracts for June wheat at the Chicago Board of Trade. A second client 114 holds 25 contracts for May corn at the Chicago Board of Trade. Two clients are shown for illustration purposes only and with the understanding that aspects of the present invention may be implemented with numerous additional clients. An aggregation module 116 may receive client account data, aggregate the data and generate firm account data. For example, aggregation module 116 may aggregate the May corn contracts held in client accounts 112 and 114 to generate firm account data showing 125 May com contracts at the Chicago Board of Trade.

Matching module 110 receives exchange account data from format module 102 and firm account data from aggregation module 116. In one embodiment a user may provide data directly to format module 102 or matching module 110, such as by entering the data with a keyboard or other conventional input device. This embodiment may be used, for example, when exchange data is received in a format that cannot be directly imported into format module 102, or matching module 110. Matching module 110 then compares the exchange account data and the firm account data and identifies any discrepancies. Comparisons may be made based on parameters such as origin, commodity, month, year, price, strike price, put or call and prompt date.

Inconsistent firm account data and exchange account data may then be brought to the user's attention. For example, if the number of May corn contracts included in the exchange account data for the Chicago Board of Trade do not correspond to the number of May corn contracts included in the firm account data for the Chicago Board of Trade, matching module 110 would identify this discrepancy.

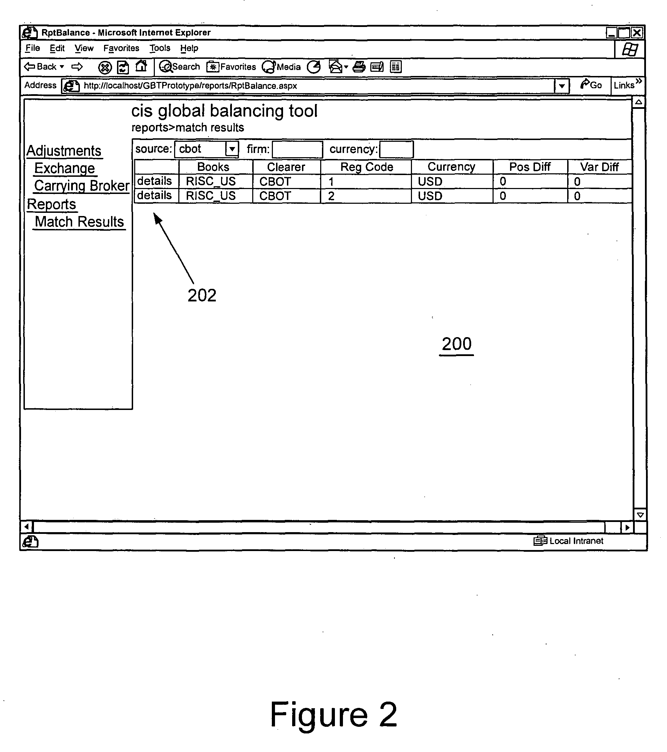

The identification of contracts that do not match may be transmitted to a display module 118. Display module 118 may then generate a computer display to present to the user. Figure 2 illustrates one exemplary page 200 for presenting account data to a user. Page 200 only lists the contracts that are not reconciled to allow the user to quickly identify and correct discrepancies. Page 200 may include hyperlinks to allow the user to quickly access additional account information and to determine the source of errors when correcting errors. For example, a hyperlink 202 may be selected by a user to display further details of a particular contract. If the first row in page 200 corresponds to a particular contract traded at a particular exchange, hyperlink 202 may link to a page that lists all of the clients who hold positions for the contract. A variety of conventional mechanisms may be used to present information to the user. For example, selecting a client name may result in contact information for that client being displayed.

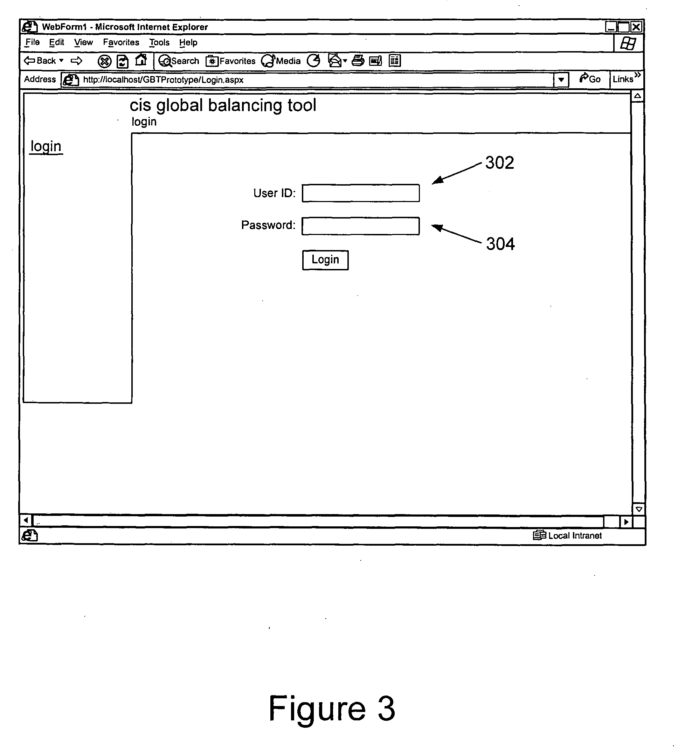

Once the cause of a discrepancy has been identified, the user may then make an adjustment to firm account data and/or exchange account data. An adjustment module 120 may be included to request information from a user and make the necessary adjustments. In one embodiment, before any adjustments to firm account data for exchange account data are made, the user wishing to make the adjustments must identify himself to the system. Figure 3 illustrates an exemplary login page. The user enters a user ID in section 302 and a password in section 304. Requiring users to identify themselves protects the integrity of the data and creates an audit trail that may be used to determine why and when data was modified.

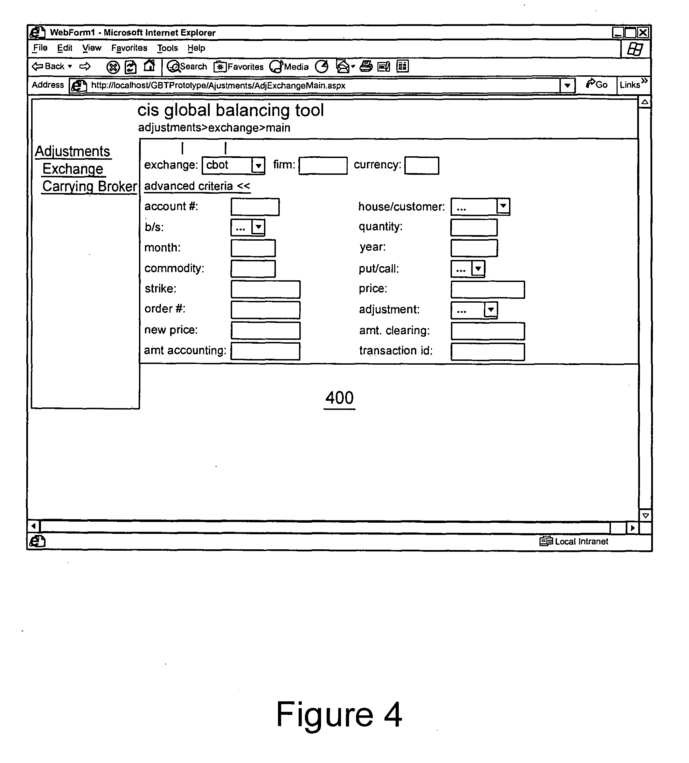

Figure 4 illustrates an adjustment page that may be generated by display module 118 and/or adjustment module 120. Page 400 allows a user to identify specific contracts and make any necessary adjustments. Exemplary fields that may be included as part of page 400 include: an account number, expiration month, buy or sell identification, commodity, strike price, order number, new price, prompt date, the identification of an exchange or trading house, quantity, expiration year, identification of the contract as a put or a call, price, adjustments and transaction identification. Alternative fields may be used in addition to or in place of the fields shown in Figure 4.

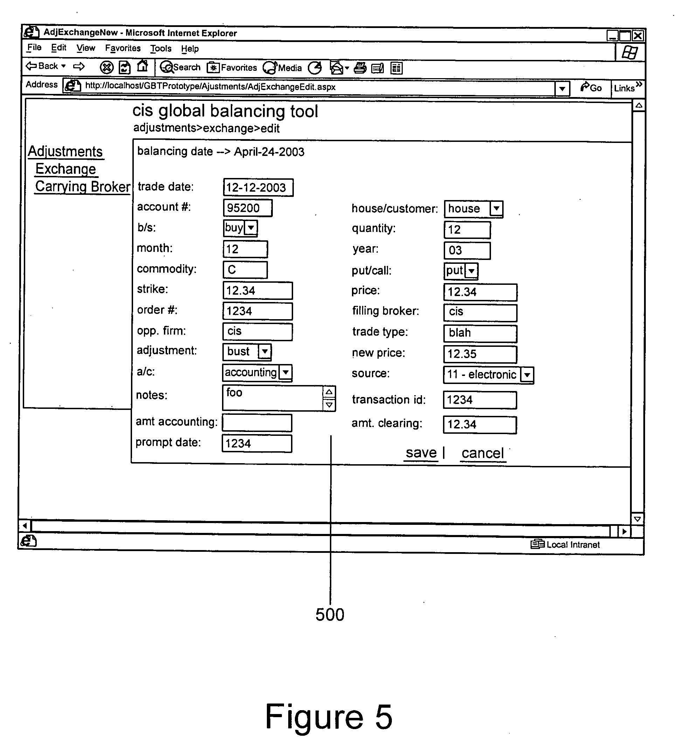

Figure 5 illustrates a page 500 that displays adjustments made by a user and that allows the user to edit those adjustments before saving the adjustments. Adjustments may be provided to matching module 110 and/or other modules or systems. In one embodiment in the invention, any adjustments made by user are entered directly into the firm account data or exchange account data maintained by the firm. In another embodiment of the invention, matching module 110 receives exchange account data, firm account data and adjustments provided by the user and repeats the matching process to identify any additional discrepancies.

One of the advantages of aspects of the present invention is that after any adjustments are made to firm account data and/or exchange account data, the relevant data may be used by other applications or processes. An integration module 122 may convert account data into a format for use by a processing application 124. For example, firm account data may be stored in a particular spreadsheet format and integration module 122 may extract relevant portions of the data, perform any necessary conversions, such as currency conversions, and export those portions to a word processing application that is used to generate a report. A report may be in the form of an electronic document, electronic file, physical document or some other form used to convey information. Integration module 122 may also directly process firm account data and/or exchange account data. In one particular embodiment, integration module 122 is used to populate fields of a segregated funds report.

The system shown in Figure 1 may also include a margin account module 126. Margin account module 126 may determine the required amounts of money that must be maintained in exchange margin accounts. For example, exchange 104 may require the brokerage house to maintain an amount of money in a margin account that is a function of the positions held by the brokerage house. A margin account module 126 may apply reconciled firm account data to the rules provided by exchange 104 to alert the user of the amount of money that must be maintained in the margin account. Margin account module 126 ensures the required funds are deposited in margin accounts so that the brokerage house may invest any access funds in other accounts.

One skilled in the art will appreciate that a variety of different modules may be added to the system shown in Figure 1 to process or use account data information. Moreover, the interconnections of the modules shown in Figure 1 merely illustrate one exemplary embodiment of the invention. The modules shown may also be configured to perform additional functions, such as the functions performed by other modules. In one embodiment of the invention, the modules shown in Figure 1 are implemented in the form of computer-executable instructions recorded on a computer readable media, such as an optical or magnetic disk or memory component.

The present invention has been described herein with reference to specific exemplary embodiments thereof. It will be apparent to those skilled in the art, that a person understanding this invention may conceive of changes or other embodiments or variations, which utilize the principles of this invention without departing from the scope of the invention as set forth in the appended claims.

## Claims

1. A computer implemented method of reconciling firm account data with exchange account data received from at least one exchange, the method comprising:
(a) receiving exchange account data that lists positions held by clients of the firm at at least one exchange;
(b) receiving firm account data that lists positions held by the clients of the firm at the exchange;
(c) comparing the exchange account data to the firm account data;
(d) displaying on a display device data included in the exchange account data that does not match data included in the firm account data;
(e) receiving an input from a user for additional information relating to the data displayed in (d); and
(f) in response to the input in (e) displaying on the display device additional information relating to the data displayed in (d).

2. The computer implemented method of claim 1, further including:
(g) receiving at least one adjustment from the user.

3. The computer implemented method of claim 2, wherein the at least one adjustment is to exchange account data.

4. The computer implemented method of claim 2, wherein the at least one adjustment is to firm account data.

5. The computer implemented method of claim 2, wherein (g) comprises receiving information identifying the user.

6. The computer implemented method of claim 5, further including creating a report from reconciled exchange account data or firm account data.

7. The computer implemented method of claim 6, wherein the report identifies users who have made adjustments to at least one of exchange account data or firm account data.

8. The computer implemented method of claim 6, wherein the report comprises a segregated funds report.

9. The computer implemented method of claim 2, further including repeating (c) after (g).

10. The computer implemented method of claim 1, further including:
reformatting exchange account data into a standard format.

11. The computer implemented method of claim 1, further including:
aggregating client account data into firm account data.

12. The computer implemented method of claim 1, further including:
calculating an amount required to maintain in at least one margin account.

13. The computer implemented method of claim 1, wherein (a) includes receiving trading position data from a brokerage house.

14. The computer implemented method of claim 1, wherein the exchange account data received in (a) does not identify clients of the firm.

15. The computer implemented method of claim 1, wherein the input in (e) comprises the selection of a hyperlink.

16. The computer implemented method of claim 6, further including performing a currency conversion.

17. The computer implemented method of claim 1, further including translating text.

18. A computer-readable medium containing computer-executable components comprising:
a matching module that compares exchange account data to firm account data and identifies data included in the exchange account data that does not match data included in the firm account data; and
a display module that generates information to display on a display device regarding the data included in the exchange account data that does not match data included in the firm account data and, in response to a request from a user, additional information regarding the data included in the exchange account data that does not match data included in the firm account data.

19. The computer-readable medium of claim 18, further including
a format module that reformats exchange account data into a standard format.

20. The computer-readable medium of claim 18, further including an aggregation module that aggregates client account data into firm account data.

21. The computer-readable medium of claim 18, further including an adjustment module configured to allow a user to adjust exchange account data and firm account data.

22. The computer-readable medium of claim 18, further including an integration module that integrates exchange account data and firm account data into a format for use by a computer application.

23. The computer-readable medium of claim 18, further including an integration module that integrates exchange account data and firm account data into at least one report.

24. The computer-readable medium of claim 18, further including a margin account module that calculates an amount required to maintain in at least one margin account.
